# EUROPEAN PATENT SPECIFICATION

(11) **EP 3 054 606 B1**
(45) Date of publication and mention of the grant of the patent: **16.05.2018**
(21) Application number: 13900592.0
(22) Date of filing: 30.12.2013
(51) Int. Cl.: H04J 3/16, H04J 3/14, H04B 10/07, H04Q 11/00, H04L 12/707, H04L 12/703

(54) **REROUTING METHOD AND AUTOMATICALLY SWITCHED OPTICAL NETWORK**
UMLEITUNGSVERFAHREN UND AUTOMATISCH VERMITTELTES OPTISCHES NETZ
PROCÉDÉ DE REROUTAGE ET RÉSEAU OPTIQUE À COMMUTATION AUTOMATIQUE

(43) Date of publication of application: 10.08.2016
(73) Proprietor: Huawei Technologies Co., Ltd., Longgang District Shenzhen, Guangdong 518129 (CN)
(72) Inventor: ZHAO, Min, Shenzhen Guangdong 518129 (CN); RAO, Bao quan, Shenzhen Guangdong 518129 (CN); CHEN, Chunhui, Shenzhen Guangdong 518129 (CN)
(74) Representative: Körber, Martin Hans
(86) International application number: PCT/CN2013/090871
(87) International publication number: WO 2015/100531

(56) References cited:
- EP-A1- 1 422 968
- EP-A1- 1 916 799
- EP-A1- 1 981 211
- EP-A1- 2 296 300
- CN-A- 101 247 664
- CN-A- 101 686 419
- CN-A- 102 064 881
- US-A1- 2012 106 948

## Description

### TECHNICAL FIELD

Embodiments of the present invention relate to optical communications technologies, and in particular, to a rerouting method and an automatically switched optical network.

### BACKGROUND

Currently, a control plane is introduced in a conventional optical transport network (OTN) to form an automatically switched optical network (ASON), thereby implementing automatic routing setting, end-to-end service grooming, automatic network recovery, and the like. As technologies develop, there is a mode of hybrid networking of an OTN and an ASON in actual networking. For clear description below, relative to an ASON provided by a same vendor, an OTN provided by the same vendor is referred to as a conventional network, and an OTN and an ASON provided by a different vendor are referred to as third-party networks. Adjacent ASONs of a same vendor are connected by using a third-party network. Generally, when a link of a third-party network is faulty, a fault alarm is transmitted by using an overhead of an optical channel transport unit-k (OTUk) layer. However, regeneration of an alarm at the OTUk layer is terminated at two ends of a physical link. That is, the alarm cannot be transmitted to an OTUk layer of an ASON by using an overhead of an OTUk layer of the third-party network, and therefore the ASON cannot detect a link fault of the third-party network, and rerouting cannot be promptly triggered to recover a connection, thereby leading to service interruption.

In the prior art, to avoid that an ASON cannot detect a link fault of a third-party network, the link fault is transmitted by using an overhead, which may pass through the third-party network, of an optical channel data unit-k (ODUk) layer. If a fault occurs, rerouting is triggered.

However, in a process of transmitting the link fault of the third-party network by using the overhead of the OTUk layer, a first node and a last node of a service need to perform packet exchange, so as to determine whether the link fault belongs to a link fault between the first node and the last node. Only if the link fault belongs to the link fault between the first node and the last node, rerouting is triggered. A triggering speed is slow, a link cannot be promptly recovered, and finally a problem that service quality cannot be ensured is caused.

The document US 2012/0106948 A1 shows an optical network and control plane signaling within the optical network and TCM monitoring over different equipment vendors. Also the document EP 1 422 968 A1 shows a failure localization method in optical networks.

Furthermore, also the document EP 1 981 211 A1 shows a method for processing tandem connection monitoring failure dependency of different levels and according equipment. It only deals with conventional optical networks. It does not show the use of ASON network elements.

Furthermore, also the document EP 1 916 799 A1 deals with optical networks. Especially, it shows a method for implementing tandem concatenation monitoring automatically and an according apparatus. It though only deals with conventional optical networks. It does not show the use of ASON network elements.

The document EP 2 296 300 A1 shows a method and apparatus for automatic discovery in optical transport networks.

### SUMMARY

Embodiments of the present invention provide a rerouting method and an automatically switched optical network, which implements that, in a mode of hybrid networking of an ASON and a third-party network, rerouting is promptly performed when the third-party network is faulty, so as to recover a link and ensure service quality.

According to a first aspect, an embodiment of the present invention provides a rerouting method, including:
determining, by a first automatically switched optical network (ASON) network element, whether a network element connected to the first ASON network element is a network element of a third-party network and/or a network element of a conventional network;
configuring, by the first ASON network element, an available first tandem connection monitoring (TCM) level for a higher order optical channel data unit-k layer of the first ASON network element if the network element connected to the first ASON network element is a network element of a third-party network and/or a network element of a conventional network, where the first TCM level is the same as or different from a second TCM level configured by a second ASON network element, and the network element of the third-party network and/or the network element of the conventional network is connected between the first ASON network element and the second ASON network element;
   monitoring, by the first ASON network element, according to the first TCM level, whether a link between the first ASON network element and the second ASON network element is faulty; and
triggering, by the first ASON network element, rerouting if the link between the first ASON network element and the second ASON network element is faulty.

Furthermore, the determining, by a first automatically switched optical network (ASON) network element, whether a network element connected to the first ASON network element is a network element of a third-party network and/or a network element of a conventional network includes:
sending, by the first ASON network element, by using an overhead of an optical channel transport unit-k layer, a first identifier to the network element connected to the first ASON network element;
determining, by the first ASON network element, whether an overhead of an optical channel transport unit-k layer of the network element can receive the first identifier;
if the first ASON network element determines that the overhead of the optical channel transport unit-k layer of the network element cannot receive the first identifier, sending, by the first ASON network element, by using an overhead of an optical channel data unit-k layer, a second identifier to the network element connected to the first ASON network element, where the first identifier is the same as or different from the second identifier; and
determining, by the first ASON network element, whether an overhead of an optical channel data unit-k layer of the network element can receive the second identifier, and if the overhead of the optical channel data unit-k layer of the network element can receive the second identifier, determining that the network element is a network element of a third-party network and/or a network element of a conventional network.

In a first possible implementation manner of the first aspect, the configuring, by the first ASON network element, an available first tandem connection monitoring (TCM) level for a higher order optical channel data unit-k layer of the first ASON network element if the network element connected to the first ASON network element is a network element of a third-party network and/or a network element of a conventional network includes:
sending, by the first ASON network element, by using the first TCM level, a third identifier to a higher order optical channel data unit-k layer of the second ASON network element; and
determining, by the first ASON network element, whether the higher order optical channel data unit-k layer of the second ASON network element can receive the third identifier, and if the third identifier can be received, determining that the first TCM is available.

With reference to the first aspect or the first possible implementation manner of the first aspect, in a second possible implementation manner of the first aspect, before the triggering, by the first ASON network element, rerouting if the link between the first ASON network element and the second ASON network element is faulty, the method further includes:
determining, by the first ASON network element, whether the higher order optical channel data unit-k layer of the first ASON network element can receive a fourth identifier that is sent by the second ASON network element by using the second TCM level; and
if the fourth identifier can be received, monitoring, according to the second TCM level, whether a link between the second ASON network element and the first ASON network element is faulty.

According to a second aspect, an embodiment of the present invention provides an automatically switched optical network (ASON) network element, including:
a determining module, configured to determine whether a network element connected to the ASON network element is a network element of a third-party network and/or a network element of a conventional network;
a configuring module, configured to, when the determining module determines that the network element connected to the ASON network element is a network element of a third-party network and/or a network element of a conventional network, configure an available first tandem connection monitoring (TCM) level for a higher order optical channel data unit-k layer, where the first TCM level is the same as or different from a second TCM level configured by a second ASON network element, and the network element of the third-party network and/or the network element of the conventional network is connected between the ASON network element and the second ASON network element;
a monitoring module, configured to monitor, according to the first TCM level configured by the configuring module, whether a link between the ASON network element and the second ASON network element is faulty; and
a triggering module, configured to trigger rerouting when the monitoring module detects that the link between the ASON network element and the second ASON network element is faulty.

The ASON network element further includes:
a sending module, configured to send, by using an overhead of an optical channel transport unit-k layer, a first identifier to the network element connected to the ASON network element, where
the determining module is further configured to determine whether an overhead of an optical channel transport unit-k layer of the network element can receive the first identifier sent by the sending module;
the sending module is further configured to, when the determining module determines that the overhead of the optical channel transport unit-k layer of the network element cannot receive the first identifier, send, by using an overhead of an optical channel data unit-k layer, a second identifier to the network element connected to the ASON network element, where the first identifier is the same as or different from the second identifier; and
the determining module is specifically configured to, when it is determined that an overhead of an optical channel data unit-k layer of the network element can receive the second identifier, determine that the network element is a network element of a third-party network and/or a network element of a conventional network.

In a first possible implementation manner of the second aspect, the sending module is specifically configured to send a third identifier to a higher order optical channel data unit-k layer of the second ASON network element by using the first TCM level; and
the determining module is further configured to, when it is determined that the higher order optical channel data unit-k layer of the second ASON network element can receive the third identifier configured by the configuring module, determine that the first TCM is available.

With reference to the second aspect or a first possible implementation manner of the second aspect, in a second possible implementation manner of the second aspect, the determining module is further configured to, before the triggering module triggers rerouting, determine whether the higher order optical channel data unit-k layer of the ASON network element can receive a fourth identifier that is sent by the second ASON network element by using the second TCM level; and
the monitoring module is further configured to, when the determining module determines that the higher order optical channel data unit-k layer of the ASON network element can receive the fourth identifier that is sent by the second ASON network element by using the second TCM level, monitor, according to the second TCM level, whether a link between the second ASON network element and the ASON network element is faulty.

According to a third aspect, an embodiment of the present invention provides an automatically switched optical network (ASON) network element, including a processor and a memory, where the memory stores an execution instruction, and when the ASON network element runs, the processor communicates with the memory, and the processor executes the execution instruction to enable the ASON network element to execute the method according to the first aspect and the first or the second possible implementation manner of the first aspect.

According to the rerouting method and the automatically switched optical network provided in the embodiments of the present invention, after determining that a network element connected to a first ASON network element is a network element of a third-party network and/or a network element of a conventional network, the first ASON network element configures a first TCM level; and monitors, according to the first TCM level, whether a link between the first ASON network element and a second ASON network element is faulty. When a fault is found, rerouting is triggered to recover the link, which implements that, in a mode of hybrid networking of an ASON and a third-party network, rerouting is promptly performed when the third-party network is faulty, so as to recover a link and ensure service quality and ensure service quality. The invention is solely defined by the appended claims. Embodiments that do not fall within the scope of the appended claims are to be understood merely as examples useful for understanding the invention.

### BRIEF DESCRIPTION OF DRAWINGS

FIG. 1 is a diagram of a network architecture applicable to a rerouting method according to the present invention;
FIG. 2 is a flowchart of a first embodiment of a rerouting method according to the present invention;
FIG. 3 is a flowchart of identifying a network element type in a rerouting method according to the present invention;
FIG. 4 is a level structural diagram based on an OTN according to the present invention;
FIG. 5 is a diagram of another network architecture applicable to a rerouting method according to the present invention;
FIG. 6 is a schematic structural diagram of a first embodiment of an ASON network element according to the present invention;
FIG 7 is a schematic of a further structural diagram of an embodiment of an ASON network element according to the present invention; and
FIG. 8 is a schematic structural diagram of a second embodiment of an ASON network element according to the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

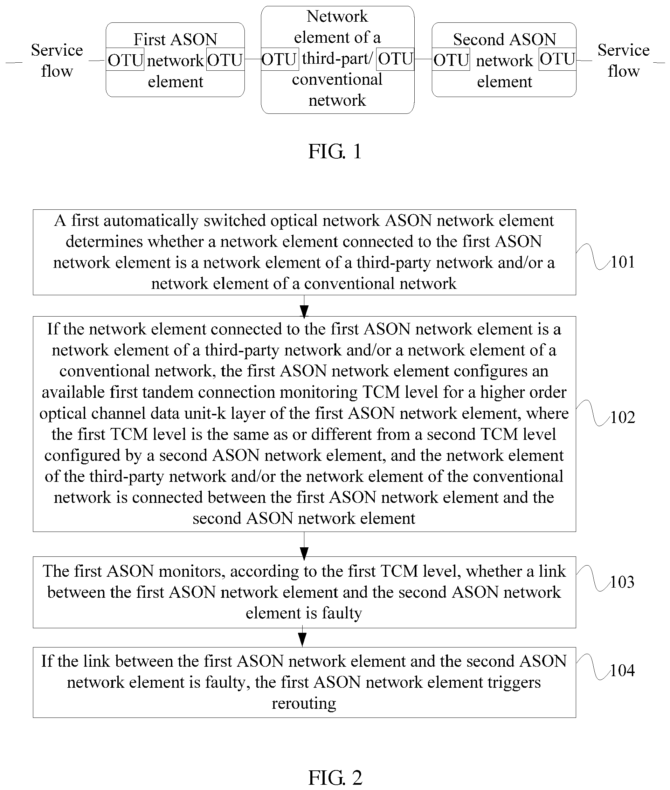

FIG. 1 is a diagram of a network architecture applicable to a rerouting method according to the present invention. As shown in FIG. 1, a network element of a third-party network and/or a network element of a conventional network is connected between ASON network elements provided by a same vendor, where the network element of the conventional network is an OTN network element provided by the same vendor, and the network element of the third-party network is an OTN network element or an ASON network element provided by a different vendor. A service flow from a client side such as an Internet Protocol (IP) network, a Multiprotocol Label Switching (MPLS) network, or an Ethernet passes through a first ASON network element and a network element of a conventional network and/or a third-party network element, and arrives at a second ASON network element; or a service flow passes through a second ASON network element and a network element of a conventional network and/or a third-party network element, and arrives at a first ASON network element. To ensure quality of service transmission, when a link between the first ASON network element and the second ASON network element is faulty or a link between the second ASON network element and the first ASON network element is faulty, timely rerouting is needed to recover the link, thereby ensuring service quality.

It should be noted that FIG. 1 shows only two ASON network elements, and in actual networking, the first ASON network element and the second ASON network element may also be connected to an ASON network element or a network element of a third-party network, a network element of a conventional network, or the like.

FIG. 2 is a flowchart of a first embodiment of a rerouting method according to the present invention. This embodiment is applicable to a scenario in which, in a mode of hybrid networking of an ASON and a third-party network, prompt rerouting is needed when a third-party network is faulty. Specifically, this embodiment includes the following steps:
101: A first automatically switched optical network (ASON) network element determines whether a network element connected to the first ASON network element is a network element of a third-party network and/or a network element of a conventional network.

Referring to both FIG. 1 and FIG. 2, in this embodiment, the first ASON network element automatically identifies a type of the network element connected to the first ASON network element. That is, it is identified whether the network element connected to the first ASON network element is an ASON network element provided by a same vendor, or a network element of a third-party network and/or a network element of a conventional network. For example, a preset table may be set on each ASON network element, information about another network element connected to the ASON network element is recorded in the preset table, and the first ASON network element may identify, according to the preset table, the type of the network element connected to the first ASON network element.
102: If the network element connected to the first ASON network element is a network element of a third-party network and/or a network element of a conventional network, the first ASON network element configures an available first tandem connection monitoring (TCM) level for a higher order optical channel data unit-k layer of the first ASON network element, where the first TCM level is the same as or different from a second TCM level configured by a second ASON network element, and the network element of the third-party network and/or the network element of the conventional network is connected between the first ASON network element and the second ASON network element.

Generally, an ODUk layer has six different TCM levels, namely TCM 1 to TCM 6. By using the TCM levels, real-time monitoring on a connection status of the ODUk layer is completed. In this step, if the first ASON network element determines that the network element connected to the first ASON network element is a network element of a third-party network, the first ASON network element configures the available first TCM level for the higher order ODUk layer of the first ASON network element.

Optionally, in this step, the first ASON network element sends a third identifier to a higher order optical channel data unit-k layer of the second ASON network element by using the first TCM level, and the first ASON network element determines whether the higher order optical channel data unit-k layer of the second ASON network element can receive the third identifier. If the third identifier can be received, the first TCM is available.

Specifically, the first ASON network element may attempt to send the third identifier to the higher order ODUk layer of the second ASON network element by using the TCM levels one by one starting from TCM 1, and determines whether the higher order ODUk layer of the second ASON network element can receive the third identifier. If the third identifier can be received, it indicates that the first TCM is available; otherwise, another TCM level is used to continue an attempt.
103: The first ASON network element monitors, according to the first TCM level, whether a link between the first ASON network element and the second ASON network element is faulty.

After the available first TCM level is determined, the first ASON network element starts TCM monitoring, so as to monitor whether the link between the first ASON network element and the second ASON network element is faulty, that is, to monitor whether a link of the network element of the third-party network and/or the network element of the conventional network is faulty.
104: If the link between the first ASON network element and the second ASON network element is faulty, the first ASON network element triggers rerouting.

When the TCM monitoring is used and it is found that the link between the first ASON network element and the second ASON network element is faulty, the first ASON network element triggers the rerouting to recover the link.

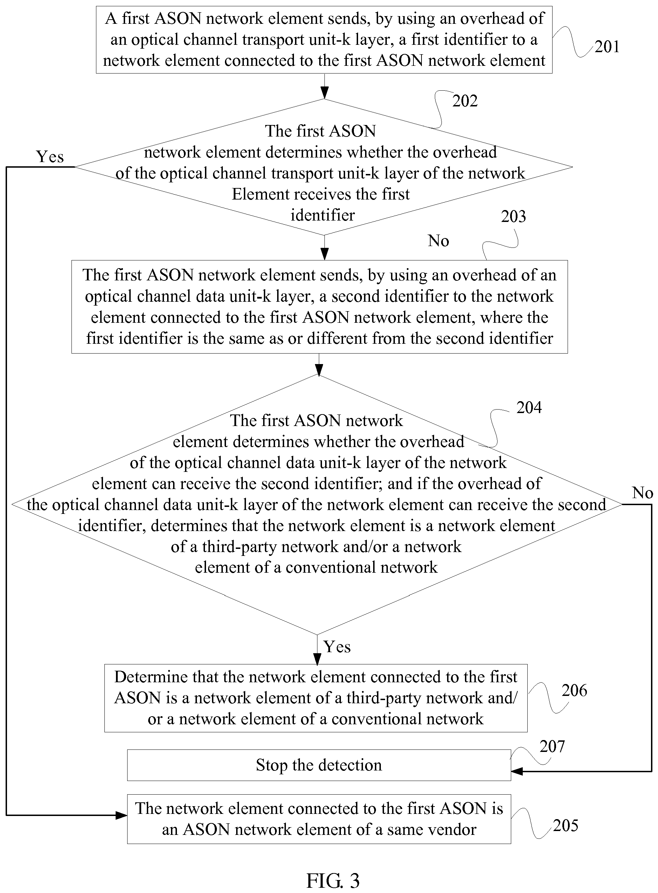

According to the rerouting method provided in this embodiment of the present invention, after determining that a network element connected to a first ASON network element is a network element of a third-party network and/or a network element of a conventional network, the first ASON network element configures a first TCM level; and monitors, according to the first TCM level, whether a link between the first ASON network element and a second ASON network element is faulty. When it is found that the link is faulty, rerouting is triggered to recover the link, which implements that, in a mode of hybrid networking of an ASON and a third-party network, rerouting is promptly performed when the third-party network is faulty, so as to recover a link and ensure service quality. In the foregoing first embodiment, the first ASON network element identifies, according to the following process, the type of the network element connected to the first ASON network element. For details, refer to FIG. 3. FIG. 3 is a flowchart of identifying a network element type in a rerouting method according to the present invention, which includes the following steps:
201: A first ASON network element sends, by using an overhead of an optical channel transport unit-k layer, a first identifier to a network element connected to the first ASON network element.

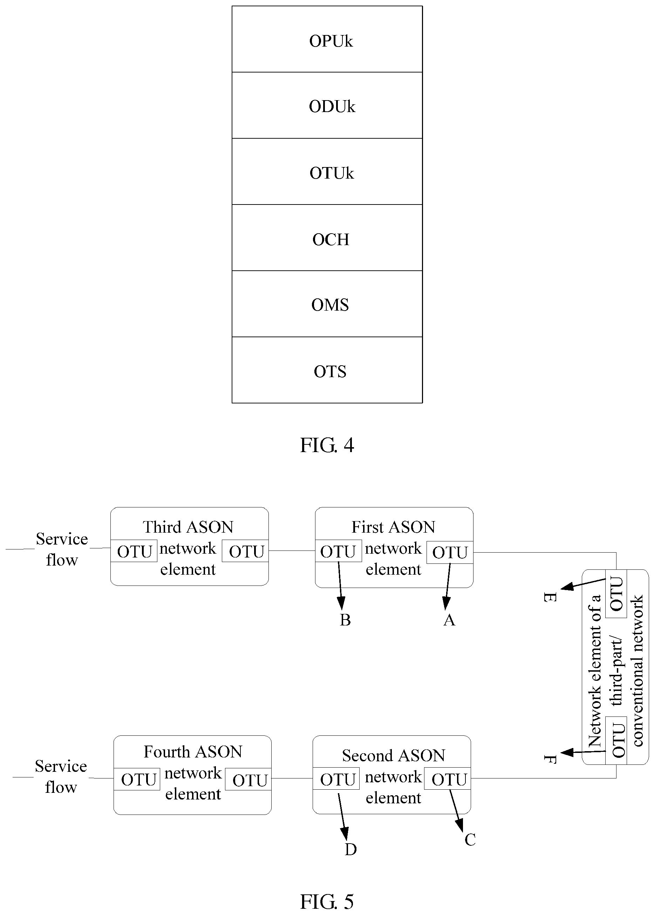

Generally, an ASON based on an OTN also has a level structure of the OTN. Details are shown in FIG. 4. FIG. 4 is a diagram of a level structure based on an OTN according to the present invention.

Referring to FIG. 4, a service flow of a client side such as an IP network and an MPLS network is encapsulated, as a payload, into an optical channel payload unit-k (OPUk) layer; an OPUk is added with a header overhead and encapsulated into an ODUk layer; an ODUk is added with a header overhead and forward error correction code(FEC) and encapsulated into an OTUk layer; electro-optical conversion is performed at the OTUk layer, and a signal is converted to an optical channel (OCH) signal; then multiple OCH signals are multiplexed as an optical multiplex section (OMS); and finally, the OMS is added with an overhead to become an optical transmission section (OTS). Generally, a network of the ODUk layer is referred to as an electrical layer network and a network of an OCH layer is referred to as an optical layer network in the industry.

In this step, an electrical layer network of the first ASON network element sends the first identifier, that is, the first ASON network element sends, by using the overhead of the OTU-k layer, the first identifier to the network element connected to the first ASON network element. The first identifier may be a customized identifier or a preset identifier, for example, "OTUk SM TTI".
202: The first ASON network element determines whether an overhead of an optical channel transport unit-k layer of the network element receives the first identifier.

The first ASON network element determines whether an overhead of an OTUk layer of the network element connected to the first ASON network element can receive the first identifier. For example, the first ASON network element determines whether a correct response can be received within a preset time, where the correct response is sent by using an IP network and the like by the network element connected to the first ASON network element. If the correct response can be received, step 205 is performed, so as to determine that the network element connected to the first ASON network element is an ASON network element of a same vendor; if the first ASON network element cannot receive the correct response, step 203 is performed.
203: The first ASON network element sends, by using an overhead of an optical channel data unit-k layer, a second identifier to the network element connected to the first ASON network element, where the first identifier is the same as or different from the second identifier.

If the first ASON network element determines that the overhead of the OTUk layer of the network element cannot receive the first identifier, the first ASON network element sends, by using the overhead of the ODUk layer, the second identifier to the network element connected to the first ASON network element, where the first identifier is the same as or different from the second identifier, for example, "ODUk PM TTI".
204: The first ASON network element determines whether an overhead of an optical channel data unit-k layer of the network element can receive the second identifier, and if the overhead of the optical channel data unit-k layer of the network element can receive the second identifier, determines that the network element is a third-party network element and/or a network element of a conventional network.

After the second identifier is sent, the first ASON network element continues to determine whether the overhead of the ODUk layer of the network element connected to the first ASON network element can receive the second identifier. If the overhead of the ODUk layer of the network element connected to the first ASON network element can receive the second identifier, step 206 is performed and it indicates that the network element is a network element of a third-party network and/or a network element of a conventional network; otherwise, step 207 is performed.

It should be noted that because the second identifier is transmitted by using the overhead of the ODUk layer ,and information and the like related to the overhead of the ODUk layer can be transparently transmitted, it cannot be determined, according to that the overhead of the ODUk layer of the network element connected to the first ASON network element can receive the second identifier, that the network element connected to the first ASON network element is a network element of a third-party network and/or a network element of a conventional network. However, the first identifier is transmitted by using the overhead of the OTUk layer, and information and the like related to the overhead of the OTUk layer cannot be transparently transmitted. That is, if there is another ASON network element between the first ASON network element and the network element of the third-party network and/or the network element of the conventional network, and the ASON network element, the first ASON network element and a second ASON network element belong to network elements of a same vendor, the first identifier cannot arrive at the second ASON network element by passing through the another ASON network element, or the network element of the third-party network and/or the network element of the conventional network. Therefore, to precisely determine whether the first ASON network element and the second ASON network element are connected by using the network element of the third-party network and/or the network element of the conventional network, the foregoing steps 202 to 204 need to follow a strict sequence.
205: Determine that the network element connected to the first ASON network element is an ASON network element of a same vendor.
206: Determine that the network element connected to the first ASON network element is a network element of a third-party network and/or a network element of a conventional network.
207: Stop the detection.

After the second identifier is sent, the first ASON network element continues to determine whether the overhead of the ODUk layer of the network element connected to the first ASON network element can receive the second identifier. If the overhead of the ODUk layer of the network element connected to the first ASON network element cannot receive the second identifier, it indicates that the second ASON network element does not exist, or the network element of the third-party network and/or the network element of the conventional network is connected only to the first ASON network element and is not connected to the second ASON network element. In this case, the detection is stopped, and next detection is started periodically.

Optionally, in the foregoing first embodiment, in addition to monitoring, according to the first TCM level, whether the link between the first ASON network element and the second ASON network element is faulty, the first ASON network element may also determine whether a higher order ODUk layer of the first ASON network element can receive a fourth identifier that is sent by the second ASON network element by using a second TCM level, and if the fourth identifier can be received, monitor, according to the second TCM level, whether the link between the second ASON network element and the first ASON network element is faulty. For example, the link between the first ASON network element and the second ASON network element is referred to as a forward link, and a link between the second ASON network element and the first ASON network element is referred to as a reverse link. The first ASON may configure an available first TCM level for the ODUk layer of the first ASON network element, and monitor, according to the first TCM level, whether the forward link is faulty. The second ASON network element may also configure an available second TCM level for the ODUk layer of the second ASON network element. In this way, the first ASON network element may monitor, according to the second TCM level, whether the reverse link is faulty. The first TCM level may be the same as or different from the second TCM level. For example, both the first TCM level and the second TCM level may be TCM 3, or the first TCM level is TCM 1 and the second TCM level is TCM 5.

Generally, k in an OTUk indicates a level of a rate, and k=1, 2, or 3. When k=1, it indicates that the rate is 2.5 Gbit/s. When k=2, it indicates the rate is 10 Gbit/s. When k=3, it indicates that the rate is 40 Gbit/s. The following uses an ODU 2as an example, that is, that it is assumed that rates of all links are 10 Gbit/s is used as an example to describe the present invention in detail. Specifically, refer to FIG. 5.

FIG. 5 is a diagram of another network architecture applicable to a rerouting method according to the present invention. As shown in FIG. 5, a first ASON network element, a second ASON network element, a third ASON network element, and a fourth ASON network element are ASON network elements that are provided by a same vendor. The first ASON network element and the second ASON network element are connected by using a network element of a third-party network and/or a network element of a conventional network, that is, a port A of the first ASON network element is connected to a port E of the network element of the third-party network and/or the network element of the conventional network; a port B of the first ASON network element is connected to the third ASON network element; a port C of the second ASON network element is connected to a port F of the network element of the third-party network and/or the network element of the conventional network; and a port D of the second ASON network element is connected to the fourth ASON network element. The port A, the port B, the port C, the port D, the port E, and the port F are, for example, ports that are used for connecting to an OTUk layer.

Referring to FIG. 5, a specific process of this embodiment is as follows:
First, all ASON network elements use an OTU2 overhead on their respective ports to send a customized first identifier, for example, to send a first identifier "sm tti test" by using an OTU2 SM TTI overhead. The first ASON network element and the second ASON network element are used as an example. The "sm tti test" is sent on all the port A, the port B, the port C, and the port D by using OTU2 SM TTI. Because the port B and the port D are directly connected to the third ASON network element and the fourth ASON network element, respectively, the port B and the port D can respectively receive "sm tti test" sent by the third ASON network element and the fourth ASON network element. Therefore, the OTU2 SM TTI overheads of the port B and the port D can receive "sm tti test". However, because the OTU2 SM TTI overhead cannot be transparently transmitted, the port A cannot receive "sm tti test" sent by the second ASON network element and the port C cannot receive "sm tti test" sent by the first ASON network element. In this way, the first ASON network element can determine that the port A is connected to the network element of the third-party network and/or the network element of the conventional network, and the second ASON network element can determine that the port C is connected to the third-party network and/or the network element of the conventional network.
Second, for the port A and the port C, the first ASON network element and the second ASON network element continue to send a customized second identifier by using the ODU2 overhead, for example, to send a second identifier "pm tti test" + port information by using an ODU2 PM TTI overhead. The port information may be a combination of a node identifier and a port identifier of a port, and the like. Because the ODU2 overhead may pass through the third-party network and/or the conventional network, if an ODU2 PM TTI overhead of the port A can receive "pm tti test"+"port C information" of the port C and an ODU2 PM TTI overhead of the port C can receive "pm tti test"+"port A information" of the port A, it may be determined that the port A and the port C are logically interconnected ports and there are a third-party network and/or a conventional network between the port A and the port C. In this case, the port A and the port C are logically remote interfaces for each other.
Third, when it is determined that the third-party network and/or the conventional network is connected between the port A and the port C, and the port A and the port C are logically remote interfaces for each other, a TCM level may be configured for the ODU2 layers of the port A and the port C. Specifically, an attempt is performed starting from TCM 1. The port A and the port C separately use an ODU2 TCM 1 TTI overhead to send a third identifier. The third identifier is, for example, "tcm tti test". If the ODU2 TCM 1 is not used in a network comprised of the network element of the third-party network and/or the network element of the conventional network, the ODU2 TCM 1 TTI overhead of the port C can receive "tcm tti test" sent by the port A, the ODU2 TCM 1 TTI overhead of the port A can also receive "tcm tti test" sent by the port C, and it indicates that the TCM 1 is an available TCM level. Otherwise, if the port A cannot receive "tcm tti test" sent by the port C or the port C cannot receive "tcm tti test" sent by the port A, it indicates that the TCM 1 is unavailable and an attempt needs to be continued by using another TCM level.

It should be noted that in this embodiment, both the port A and the port C use TCM 1. However, in an actual feasible implementation manner, a TCM level used by the port A and TCM used by the port C may be different.

Finally, after the available TCM level is determined, assuming that the first ASON network element determines that the first TCM level is TCM 2, ODU2 TCM 2 is used on the port A and the port C, and whether a link between the port A and the port C is faulty is monitored. When the link between the port A and the port C is faulty, rerouting is promptly triggered. Assuming that the first ASON network element determines that a second TCM level is TCM 4, ODU2 TCM 4 is used on the port C and the port A, and whether a link between the port C and the port A is faulty is monitored. When the link between the port C and the port A is faulty, rerouting is promptly triggered.

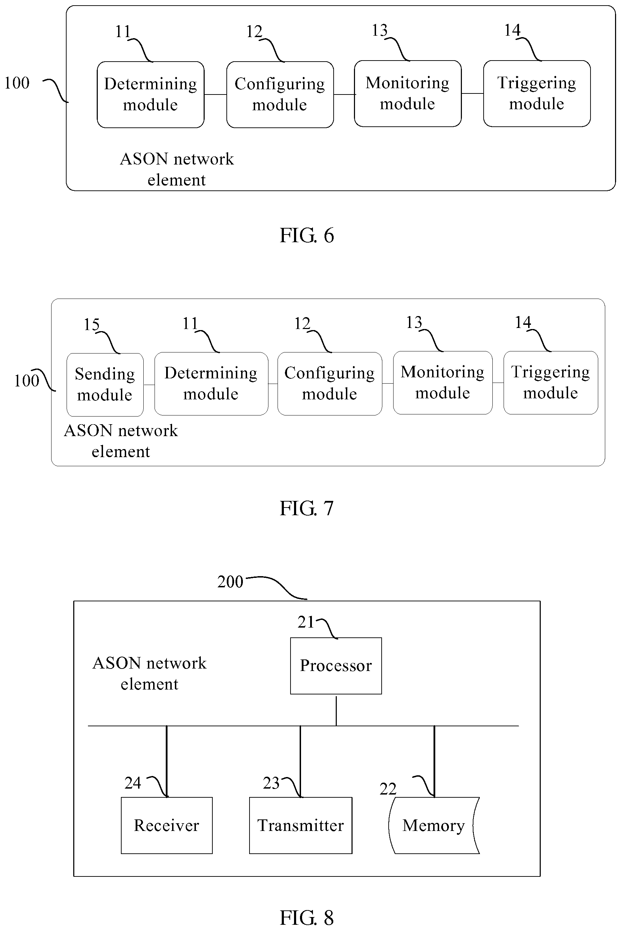

FIG. 6 is a schematic structural diagram of a first embodiment of an ASON network element according to the present invention. An ASON network element provided in this embodiment is an apparatus embodiment corresponding to the embodiment in FIG. 2 in the present invention. Details about a specific implementation process are not described herein again. Specifically, an ASON network element 100 provided by this embodiment includes:
a determining module 11, configured to determine whether a network element connected to the ASON network element 100 is a network element of a third-party network and/or a network element of a conventional network;
a configuring module 12, configured to, when the determining module 11 determines that the network element connected to the ASON network element is a network element of a third-party network and/or a network element of a conventional network, configure an available first tandem connection monitoring (TCM) level for a higher order optical channel data unit-k layer, where the first TCM level is the same as or different from a second TCM level configured by a second ASON network element, and the network element of the third-party network and/or the network element of the conventional network is connected between the ASON network element and the second ASON network element;
a monitoring module 13, configured to monitor, according to the first TCM level configured by the configuring module 12, whether a link between the ASON network element and the second ASON network element is faulty; and
a triggering module 14, configured to trigger rerouting when the monitoring module 13 detects that the link between the ASON network element and the second ASON network element is faulty.

The ASON network element provided in this embodiment of the present invention configures a first TCM level after determining that a network element connected to the ASON network element is a network element of a third-party network and/or a network element of a conventional network; and monitors, according to the first TCM level, whether a link between the ASON network element and a second ASON network element is faulty. When it is found that the link is faulty, rerouting is triggered to recover the link, which implements that, in a mode of hybrid networking of an ASON and a third-party network, rerouting is promptly performed when the third-party network is faulty, so as to recover a link and ensure service quality.

FIG. 7 is a schematic of a further structural diagram of an embodiment of an ASON network element according to the present invention. As shown in FIG. 7, on a basis of FIG. 6, the ASON network element in this embodiment further includes:
a sending module 15, configured to send, by using an overhead of an optical channel transport unit-k layer, a first identifier to the network element connected to the ASON network element, where
the determining module 11 is further configured to determine whether an overhead of an optical channel transport unit-k layer of the network element can receive the first identifier sent by the sending module 15;
the sending module 15 is further configured to, when the determining module 11 determines that the overhead of the optical channel transport unit-k layer of the network element cannot receive the first identifier, send, by using an overhead of an optical channel data unit-k layer, a second identifier to the network element connected to the ASON network element, where the first identifier is the same as or different from the second identifier; and
the determining module 11 is specifically configured to, when it is determined that an overhead of an optical channel data unit-k layer of the network element can receive the second identifier, determine that the network element is a third-party network element and/or a network element of a conventional network.

Optionally, in the foregoing embodiment, the sending module 15 is specifically configured to send a third identifier to a higher order optical channel data unit-k layer of a second ASON network element by using the first TCM level; and
the determining module 11 is further configured to, when it is determined that the higher order optical channel data unit-k layer of the second ASON network element can receive the third identifier configured by the configuring module 12, determine that the first TCM is available.

Optionally, in the foregoing embodiment, the determining module 11 is further configured to, before the triggering module 14 triggers rerouting, determine whether the higher order optical channel data unit-k layer of the ASON network element can receive a fourth identifier that is sent by the second ASON network element by using the second TCM level; and
the monitoring module 13 is further configured to, when the determining module 11 determines that the higher order optical channel data unit-k layer of the ASON network element can receive the fourth identifier that is sent by the second ASON network element by using the second TCM level, monitor, according to the second TCM level, whether a link between the second ASON network element and the ASON network element is faulty.

FIG. 8 is a schematic structural diagram of a second embodiment of an ASON network element according to the present invention. As shown in FIG. 8, an ASON network element 200 provided in this embodiment includes a processor 21 and a memory 22. The ASON network element 200 may further include a transmitter 23 and a receiver 24. The transmitter 23 and the receiver 24 may be connected to the processor 21. The transmitter 23 is configured to send data or information, the receiver 24 is configured to receive the data or the information, and the memory 22 stores an execution instruction. When the ASON network element 200 runs, the processor 21 communicates with the memory 22, the processor 21 invokes the execution instruction in the memory 22 to execute the method embodiment shown in FIG. 2. An implementation principle and a technical effect thereof are similar, and details are not described herein again.

A person of ordinary skill in the art may understand that all or a part of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A rerouting method, comprising:
determining (101), by a first automatically switched optical network, ASON, network element, whether a network element connected to the first ASON network element is a network element of a third-party network and/or a network element of a conventional network;
configuring (102), by the first ASON network element, an available first tandem connection monitoring, TCM, level for a higher order optical channel data unit-k layer of the first ASON network element if the network element connected to the first ASON network element is a network element of a third-party network and/or a network element of a conventional network, wherein the first TCM level is the same as or different from a second TCM level configured by a second ASON network element, and the network element of the third-party network and/or the network element of the conventional network is connected between the first ASON network element and the second ASON network element;
monitoring (103), by the first ASON network element, according to the first TCM level, whether a link between the first ASON network element and the second ASON network element is faulty; and
triggering (104), by the first ASON network element, rerouting if the link between the first ASON network element and the second ASON network element is faulty;
wherein the determining, by a first automatically switched optical network, ASON network element, whether a network element connected to the first ASON network element is a network element of a third-party network and/or a network element of a conventional network comprises:
sending (201), by the first ASON network element, by using an overhead of an optical channel transport unit-k layer, a first identifier to the network element connected to the first ASON network element;
determining (202), by the first ASON network element, whether an overhead of an optical channel transport unit-k layer of the network element connected to the first ASON network element can receive the first identifier;
if the first ASON network element determines that the overhead of the optical channel transport unit-k layer of the network element connected to the first ASON network element cannot receive the first identifier, sending (203), by the first ASON network element, by using an overhead of an optical channel data unit-k layer, a second identifier to the network element connected to the first ASON network element, wherein the first identifier is the same as or different from the second identifier; and
determining (204), by the first ASON network element, whether an overhead of an optical channel data unit-k layer of the network element connected to the first ASON network element can receive the second identifier, and
if the overhead of the optical channel data unit-k layer of the network element connected to the first ASON network element can receive the second identifier, determining that the network element connected to the first ASON network element is a network element of a third-party network and/or a network element of a conventional network.

2. The method according to claim 1, the configuring, by the first ASON network element, an available first tandem connection monitoring, TCM level for a higher order optical channel data unit-k layer of the first ASON network element if the network element connected to the first ASON network element is a network element of a third-party network and/or a network element of a conventional network comprises:
sending, by the first ASON network element, a third identifier to a higher order optical channel data unit-k layer of the second ASON network element by using the first TCM level; and
determining, by the first ASON network element, whether the higher order optical channel data unit-k layer of the second ASON network element can receive the third identifier, wherein if the third identifier can be received, the first TCM level is available.

3. The method according to any one of claims 1 to 2, wherein before the triggering, by the first ASON network element, rerouting if the link between the first ASON network element and the second ASON network element is faulty, the method further comprises:
determining, by the first ASON network element, whether the higher order optical channel data unit-k layer of the first ASON network element can receive a fourth identifier that is sent by the second ASON network element by using the second TCM level; and
if the fourth identifier can be received, monitoring, according to the second TCM level, whether a link between the second ASON network element and the first ASON network element is faulty.

4. An automatically switched optical network, ASON, network element, comprising:
a determining module (11), configured to determine whether a network element connected to the ASON network element is a network element of a third-party network and/or a network element of a conventional network;
a configuring module (12), configured to, when the determining module determines that the network element connected to the ASON network element is a network element of a third-party network and/or a network element of a conventional network, configure an available first tandem connection monitoring, TCM, level for a higher order optical channel data unit-k layer, wherein the first TCM level is the same as or different from a second TCM level configured by a second ASON network element, and the network element of the third-party network and/or the network element of the conventional network is connected between the ASON network element and the second ASON network element;
a monitoring module (13), configured to monitor, according to the first TCM level configured by the configuring module, whether a link between the ASON network element and the second ASON network element is faulty; and
a triggering module (14), configured to trigger rerouting when the monitoring module detects that the link between the ASON network element and the second ASON network element is faulty;
wherein the ASON network element further comprises:
a sending module (15), configured to send, by using an overhead of an optical channel transport unit-k layer, a first identifier to the network element connected to the ASON network element, wherein
the determining module (11) is further configured to determine whether an overhead of an optical channel transport unit-k layer of the network element connected to the ASON network element can receive the first identifier sent by the sending module;
the sending module (15) is further configured to, when the determining module (11) determines that the overhead of the optical channel transport unit-k layer of the network element connected to the ASON network element cannot receive the first identifier, send, by using an overhead of an optical channel data unit-k layer, a second identifier to the network element connected to the ASON network element, wherein the first identifier is the same as or different from the second identifier; and
the determining module (11) is specifically configured to, when it is determined that an overhead of an optical channel data unit-k layer of the network element connected to the ASON network element can receive the second identifier, determine that the network element connected to the ASON network element is a network element of a third-party network and/or a network element of a conventional network.

5. The network element according to claim 4, wherein:
the sending module (15) is specifically configured to send a third identifier to a higher order optical channel data unit-k layer of the second ASON network element by using the first TCM level; and
the determining module (11) is further configured to, when it is determined that the higher order optical channel data unit-k layer of the second ASON network element can receive the third identifier configured by the configuring module, determine that the first TCM is available.

6. The network element according to any one of claims 4 or 5, wherein:
the determining module (11) is further configured to, before the triggering module (14) triggers rerouting, determine whether the higher order optical channel data unit-k layer of the ASON network element can receive a fourth identifier that is sent by the second ASON network element by using the second TCM level; and
the monitoring module (13) is further configured to, when the determining module (11) determines that the higher order optical channel data unit-k layer of the ASON network element can receive the fourth identifier that is sent by the second ASON network element by using the second TCM level, monitor, according to the second TCM level, whether a link between the second ASON network element and the ASON network element is faulty.

7. An automatically switched optical network, ASON, network element, comprising a receiver (24), a transmitter (23), a processor (21) and a memory (22), wherein the memory stores an execution instruction, and when the ASON network element runs, the processor communicates with the memory, and the processor executes the execution instruction to enable the ASON network element to execute the method according to any one of claims 1 to 3.

## Patentansprüche

1. Umleitungsverfahren, umfassend:
Ermitteln (101) durch ein erstes Netzwerkelement eines automatisch geschalteten optischen Netzwerks (Automatically Switched Optical Network network element, ASON-Netzwerkelement), ob ein Netzwerkelement, das mit dem ersten ASON-Netzwerkelement verbunden ist, ein Netzwerkelement eines Drittparteinetzwerks und/oder ein Netzwerkelement eines herkömmlichen Netzwerks ist;
Konfigurieren (102) durch das erste ASON-Netzwerkelement einer verfügbaren ersten Tandemverbindungsüberwachungsebene (Tandem Connection Monitoring level, TCM-Ebene) für eine Schicht einer optischen Kanaldateneinheit-k höherer Ordnung des ersten ASON-Netzwerkelements, wenn das Netzwerkelement, das mit dem ersten ASON-Netzwerkelement verbunden ist, ein Netzwerkelement eines Drittparteinetzwerks und/oder ein Netzwerkelement eines herkömmlichen Netzwerks ist, wobei die erste TCM-Ebene die gleiche wie oder eine andere als eine zweite TCM-Ebene ist, die von einem zweiten ASON-Netzwerkelement konfiguriert wird, und wobei das Netzwerkelement des Drittparteinetzwerks und/oder das Netzwerkelement des herkömmlichen Netzwerks zwischen das erste ASON-Netzwerkelement und das zweite ASON-Netzwerkelement geschaltet ist;
Überwachen (103) durch das erste ASON-Netzwerkelement gemäß der ersten TCM-Ebene, ob eine Verbindung zwischen dem ersten ASON-Netzwerkelement und dem zweiten ASON-Netzwerkelement fehlerhaft ist; und
Auslösen (104) eines Umleitens durch das erste ASON-Netzwerkelement, wenn die Verbindung zwischen dem ersten ASON-Netzwerkelement und dem zweiten ASON-Netzwerkelement fehlerhaft ist;
wobei das Ermitteln durch ein erstes Netzwerkelement eines automatisch geschalteten optischen Netzwerks, ASON-Netzwerkelement, ob ein Netzwerkelement, das mit dem ersten ASON-Netzwerkelement verbunden ist, ein Netzwerkelement eines Drittparteinetzwerks und/oder ein Netzwerkelement eines herkömmlichen Netzwerks ist, umfasst:
Senden (201) durch das erste ASON-Netzwerkelement einer ersten Kennung an das Netzwerkelement, das mit dem ersten ASON-Netzwerkelement verbunden ist, indem ein "Overhead" einer Schicht einer optischen Kanaltransporteinheit-k verwendet wird; Ermitteln (202) durch das erste ASON-Netzwerkelement, ob ein "Overhead" einer Schicht einer optischen Kanaltransporteinheit-k des Netzwerkelements, das mit dem ersten ASON-Netzwerkelement verbunden ist, die erste Kennung empfangen kann;
wenn das erste ASON-Netzwerkelement ermittelt, dass der "Overhead" der Schicht der optischen Kanaltransporteinheit-k des Netzwerkelements, das mit dem ersten ASON-Netzwerkelement verbunden ist, die erste Kennung nicht empfangen kann, Senden (203) durch das erste ASON-Netzwerkelement einer zweiten Kennung an das Netzwerkelement, das mit dem ersten ASON-Netzwerkelement verbunden ist, indem ein "Overhead" einer Schicht einer optischen Kanaldateneinheit-k verwendet wird, wobei die erste Kennung die gleiche wie oder eine andere als die zweite Kennung ist; und
Ermitteln (204) durch das erste ASON-Netzwerkelement, ob ein "Overhead" einer Schicht einer optischen Kanaldateneinheit-k des Netzwerkelements, das mit dem ersten ASON-Netzwerkelement verbunden ist, die zweite Kennung empfangen kann; und
wenn der "Overhead" der Schicht der optischen Kanaldateneinheit-k des Netzwerkelements, das mit dem ersten ASON-Netzwerkelement verbunden ist, die zweite Kennung empfangen kann, Ermitteln, dass das Netzwerkelement, das mit dem ersten ASON-Netzwerkelement verbunden ist, ein Netzwerkelement eines Drittparteinetzwerks und/oder ein Netzwerkelement eines herkömmlichen Netzwerks ist.

2. Verfahren nach Anspruch 1, wobei das Konfigurieren durch das erste ASON-Netzwerkelement einer verfügbaren ersten Tandemverbindungsüberwachungsebene, TCM-Ebene, für eine Schicht einer optischen Kanaldateneinheit-k höherer Ordnung des ersten ASON-Netzwerkelements, wenn das Netzwerkelement, das mit dem ersten ASON-Netzwerkelement verbunden ist, ein Netzwerkelement eines Drittparteinetzwerks und/oder ein Netzwerkelement eines herkömmlichen Netzwerks ist, umfasst:
Senden durch das erste ASON-Netzwerkelement einer dritten Kennung an eine Schicht einer optischen Kanaldateneinheit-k höherer Ordnung des zweiten ASON-Netzwerkelements, indem die erste TCM-Ebene verwendet wird; und
Ermitteln durch das erste ASON-Netzwerkelement, ob die Schicht einer optischen Kanaldateneinheit-k höherer Ordnung des zweiten ASON-Netzwerkelements die dritte Kennung empfangen kann, wobei die erste TCM-Ebene zur Verfügung steht, wenn die dritte Kennung empfangen werden kann.

3. Verfahren nach einem der Ansprüche 1 bis 2, wobei das Verfahren vor dem Auslösen des Umleitens durch das erste ASON-Netzwerkelement, wenn die Verbindung zwischen dem ersten ASON-Netzwerkelement und dem zweiten ASON-Netzwerkelement fehlerhaft ist, außerdem umfasst:
Ermitteln durch das erste ASON-Netzwerkelement, ob die Schicht einer optischen Kanaldateneinheit-k höherer Ordnung des ersten ASON-Netzwerkelements eine vierte Kennung empfangen kann, die von dem zweiten ASON-Netzwerkelement gesendet wird, indem die zweite TCM-Ebene verwendet wird; und
wenn die vierte Kennung empfangen werden kann, Überwachen gemäß der zweiten TCM-Ebene, ob eine Verbindung zwischen dem zweiten ASON-Netzwerkelement und dem ersten ASON-Netzwerkelement fehlerhaft ist.

4. Netzwerkelement eines automatisch geschalteten optischen Netzwerks, ASON-Netzwerkelement, umfassend:
ein Ermittlungsmodul (11), das konfiguriert ist zum Ermitteln, ob ein Netzwerkelement, das mit dem ASON-Netzwerkelement verbunden ist, ein Netzwerkelement eines Drittparteinetzwerks und/oder ein Netzwerkelement eines herkömmlichen Netzwerks ist;
ein Konfigurationsmodul (12), das konfiguriert ist, wenn das Ermittlungsmodul ermittelt, dass das Netzwerkelement, das mit dem ASON-Netzwerkelement verbunden ist, ein Netzwerkelement eines Drittparteinetzwerks und/oder ein Netzwerkelement eines herkömmlichen Netzwerks ist, zum Konfigurieren einer verfügbaren ersten Tandemverbindungsüberwachungsebene, TCM-Ebene, für eine Schicht einer optischen Kanaldateneinheit-k höherer Ordnung, wobei die erste TCM-Ebene die gleiche wie oder eine andere als eine zweite TCM-Ebene ist, die von einem zweiten ASON-Netzwerkelement konfiguriert wird, und wobei das Netzwerkelement des Drittparteinetzwerks und/oder das Netzwerkelement des herkömmlichen Netzwerks zwischen das ASON-Netzwerkelement und das zweite ASON-Netzwerkelement geschaltet ist;
ein Überwachungsmodul (13), das konfiguriert ist zum Überwachen gemäß der ersten TCM-Ebene, die durch das Konfigurationsmodul konfiguriert wurde, ob eine Verbindung zwischen dem ASON-Netzwerkelement und dem zweiten ASON-Netzwerkelement fehlerhaft ist; und
ein Auslösemodul (14), das konfiguriert ist zum Auslösen eines Umleitens, wenn das Überwachungsmodul erkennt, dass die Verbindung zwischen dem ASON-Netzwerkelement und dem zweiten ASON-Netzwerkelement fehlerhaft ist;
wobei das ASON-Netzwerkelement außerdem umfasst:
ein Sendemodul (15), das konfiguriert ist zum Senden einer ersten Kennung an das Netzwerkelement, das mit dem ASON-Netzwerkelement verbunden ist, indem ein "Overhead" einer Schicht einer optischen Kanaltransporteinheit-k verwendet wird, wobei das Ermittlungsmodul (11) außerdem konfiguriert ist zum Ermitteln, ob ein "Overhead" einer Schicht einer optischen Kanaltransporteinheit-k des Netzwerkelements, das mit dem ASON-Netzwerkelement verbunden ist, die von dem Sendemodul gesendete erste Kennung empfangen kann;
wobei das Sendemodul (15) außerdem konfiguriert ist, wenn das Ermittlungsmodul (11) ermittelt, dass der "Overhead" der Schicht der optischen Kanaltransporteinheit-k des Netzwerkelements, das mit dem ASON-Netzwerkelement verbunden ist, die erste Kennung nicht empfangen kann, zum Senden einer zweiten Kennung an das Netzwerkelement, das mit dem ASON-Netzwerkelement verbunden ist, indem ein "Overhead" einer Schicht einer optischen Kanaldateneinheit-k verwendet wird, wobei die erste Kennung die gleiche wie oder eine andere als die zweite Kennung ist; und
wobei das Ermittlungsmodul (11) insbesondere konfiguriert ist, wenn ermittelt wird, dass ein "Overhead" einer Schicht der optischen Kanaldateneinheit-k des Netzwerkelements, das mit dem ASON-Netzwerkelement verbunden ist, die zweite Kennung empfangen kann, zum Ermitteln, dass das Netzwerkelement, das mit dem ASON-Netzwerkelement verbunden ist, ein Netzwerkelement eines Drittparteinetzwerks und/oder ein Netzwerkelement eines herkömmlichen Netzwerks ist.

5. Netzwerkelement nach Anspruch 4, wobei
das Sendemodul (15) insbesondere konfiguriert ist zum Senden einer dritten Kennung an eine Schicht einer optischen Kanaldateneinheit-k höherer Ordnung des zweiten ASON-Netzwerkelements, indem die erste TCM-Ebene verwendet wird; und
das Ermittlungsmodul (11) außerdem konfiguriert ist, wenn ermittelt wird, dass die Schicht der optischen Kanaldateneinheit-k höherer Ordnung des zweiten ASON-Netzwerkelements die von dem Konfigurationsmodul konfigurierte dritte Kennung empfangen kann, zum Ermitteln, dass die erste TCM-Ebene zur Verfügung steht.

6. Netzwerkelement nach einem der Ansprüche 4 oder 5, wobei:
das Ermittlungsmodul (11) außerdem konfiguriert ist, bevor das Auslösemodul (14) ein Umleiten auslöst, zum Ermitteln, ob die Schicht einer optischen Kanaldateneinheit-k höherer Ordnung des ASON-Netzwerkelements eine vierte Kennung empfangen kann, die von dem zweiten ASON-Netzwerkelement gesendet wird, indem die zweite TCM-Ebene verwendet wird; und
das Überwachungsmodul (13) außerdem konfiguriert ist, wenn das Ermittlungsmodul (11) ermittelt, dass die Schicht einer optischen Kanaldateneinheit-k höherer Ordnung des ASON-Netzwerkelements die vierte Kennung empfangen kann, die von dem zweiten ASON-Netzwerkelement gesendet wird, indem die zweite TCM-Ebene verwendet wird, zum Überwachen gemäß der zweiten TCM-Ebene, ob eine Verbindung zwischen dem zweiten ASON-Netzwerkelement und dem ASON-Netzwerkelement fehlerhaft ist.

7. Netzwerkelement eines automatisch geschalteten optischen Netzwerks, ASON-Netzwerkelement, das einen Empfänger (24), einen Sender (23), einen Prozessor (21) und einen Speicher (22) umfasst, wobei der Speicher eine Ausführungsanweisung speichert, und wobei, wenn das ASON-Netzwerkelement in Betrieb ist, der Prozessor mit dem Speicher kommuniziert, und wobei der Prozessor die Ausführungsanweisung ausführt, um dem ASON-Netzwerkelement zu ermöglichen, das Verfahren nach einem der Ansprüche 1 bis 3 auszuführen.

## Revendications

1. Procédé de reroutage, comprenant :
la détermination (101), par un premier élément de réseau d'un réseau optique à commutation automatique, ASON (Automatically Switched Optical Network), du fait de savoir si un élément de réseau connecté au premier élément de réseau ASON est un élément de réseau d'un réseau tiers et/ou un élément de réseau d'un réseau classique ;
la configuration (102), par le premier élément de réseau ASON, d'un premier niveau de surveillance de connexion en tandem, TCM (Tandem Connexion Monitoring), disponible pour une couche d'unité k de données de canal optique d'ordre supérieur du premier élément de réseau ASON si l'élément de réseau connecté au premier élément de réseau ASON est un élément de réseau d'un réseau tiers et/ou un élément de réseau d'un réseau classique, dans lequel le premier niveau TCM est identique à un deuxième niveau TCM configuré par un deuxième élément de réseau ASON ou différent de celui-ci, et l'élément de réseau du réseau tiers et/ou l'élément de réseau du réseau classique est connecté entre le premier élément de réseau ASON et le deuxième élément de réseau ASON ;
la surveillance (103), par le premier élément de réseau ASON, conformément au premier niveau TCM, du fait de savoir si une liaison entre le premier élément de réseau ASON et le deuxième élément de réseau ASON est défectueuse ; et
le déclenchement (104), par le premier élément de réseau ASON, d'un reroutage si la liaison entre le premier élément de réseau ASON et le deuxième élément de réseau ASON est défectueuse ;
dans lequel la détermination, par le premier élément de réseau d'un réseau optique à commutation automatique, ASON, du fait de savoir si un élément de réseau connecté au premier élément de réseau ASON est un élément de réseau d'un réseau tiers et/ou un élément de réseau d'un réseau classique comprend :
l'envoi (201), par le premier élément de réseau ASON, par utilisation d'un surdébit d'une couche d'unité k de transport de canal optique, d'un premier identifiant à l'élément de réseau connecté au premier élément de réseau ASON ;
la détermination (202), par le premier élément de réseau ASON, du fait de savoir si un surdébit d'une couche d'unité k de transport de canal optique de l'élément de réseau connecté au premier élément de réseau ASON peut recevoir le premier identifiant ;
si le premier élément de réseau ASON détermine que le surdébit de la couche d'unité k de transport de canal optique de l'élément de réseau connecté au premier élément de réseau ASON ne peut pas recevoir le premier identifiant, l'envoi (203), par le premier élément de réseau ASON, par utilisation d'un surdébit d'une couche d'unité k de données de canal optique, d'un deuxième identifiant à l'élément de réseau connecté au premier élément de réseau ASON, dans lequel le premier identifiant est identique au deuxième identifiant ou différent de celui-ci ; et
la détermination (204), par le premier élément de réseau ASON, du fait de savoir si un surdébit d'une couche d'unité k de données de canal optique de l'élément de réseau connecté au premier élément de réseau ASON peut recevoir le deuxième identifiant, et
si le surdébit de la couche d'unité k de données de canal optique de l'élément de réseau connecté au premier élément de réseau ASON peut recevoir le deuxième identifiant, la détermination du fait que l'élément de réseau connecté au premier élément de réseau ASON est un élément de réseau d'un réseau tiers et/ou un élément de réseau d'un réseau classique.

2. Procédé selon la revendication 1, dans lequel la configuration, par le premier élément de réseau ASON, d'un premier niveau de surveillance de connexion en tandem, TCM, disponible pour une couche d'unité k de données de canal optique d'ordre supérieur du premier élément de réseau ASON si l'élément de réseau connecté au premier élément de réseau ASON est un élément de réseau d'un réseau tiers et/ou un élément de réseau d'un réseau classique comprend :
l'envoi, par le premier élément de réseau ASON, d'un troisième identifiant à une couche d'unité k de données de canal optique d'ordre supérieur du deuxième élément de réseau ASON par utilisation du premier niveau TCM ; et
la détermination, par le premier élément de réseau ASON, du fait de savoir si la couche d'unité k de données de canal optique d'ordre supérieur du deuxième élément de réseau ASON peut recevoir le troisième identifiant, dans lequel, si le troisième identifiant peut être reçu, le premier niveau TCM est disponible.

3. Procédé selon l'une quelconque des revendications 1 et 2, dans lequel, avant le déclenchement, par le premier élément de réseau ASON, du reroutage si la liaison entre le premier élément de réseau ASON et le deuxième élément de réseau ASON est défectueuse, le procédé comprend en outre :
la détermination, par le premier élément de réseau ASON, du fait de savoir si la couche d'unité k de données de canal optique d'ordre supérieur du premier élément de réseau ASON peut recevoir un quatrième identifiant qui est envoyé par le deuxième élément de réseau ASON par utilisation du deuxième niveau TCM ; et
si le quatrième identifiant peut être reçu, la surveillance, conformément au deuxième niveau TCM, du fait de savoir si une liaison entre le deuxième élément de réseau ASON et le premier élément de réseau ASON est défectueuse.

4. Elément de réseau d'un réseau optique à commutation automatique, ASON, comprenant :
un module de détermination (11), configuré pour déterminer si un élément de réseau connecté à l'élément de réseau ASON est un élément de réseau d'un réseau tiers et/ou un élément de réseau d'un réseau classique ;
un module de configuration (12), configuré pour, lorsque le module de détermination détermine que l'élément de réseau connecté à l'élément de réseau ASON est un élément de réseau d'un réseau tiers et/ou un élément de réseau d'un réseau classique, configurer un premier niveau de surveillance de connexion en tandem, TCM, disponible pour une couche d'unité k de données de canal optique d'ordre supérieur, dans lequel le premier niveau TCM est identique à un deuxième niveau TCM configuré par un deuxième élément de réseau ASON ou différent de celui-ci, et l'élément de réseau du réseau tiers et/ou l'élément de réseau du réseau classique est connecté entre l'élément de réseau ASON et le deuxième élément de réseau ASON ;
un module de surveillance (13), configuré pour surveiller, conformément au premier niveau TCM configuré par le module de configuration, si une liaison entre l'élément de réseau ASON et le deuxième élément de réseau ASON est défectueuse ; et
un module de déclenchement (14), configuré pour déclencher un reroutage lorsque le module de surveillance détecte que la liaison entre l'élément de réseau ASON et le deuxième élément de réseau ASON est défectueuse ;
dans lequel l'élément de réseau ASON comprend en outre :
un module d'envoi (15), configuré pour envoyer, par utilisation d'un surdébit d'une couche d'unité k de transport de canal optique, un premier identifiant à l'élément de réseau connecté à l'élément de réseau ASON, dans lequel
le module de détermination (11) est en outre configuré pour déterminer si un surdébit d'une couche d'unité k de transport de canal optique de l'élément de réseau connecté à l'élément de réseau ASON peut recevoir le premier identifiant envoyé par le module d'envoi ;
le module d'envoi (15) est en outre configuré pour, lorsque le module de détermination (11) détermine que le surdébit de la couche d'unité k de transport de canal optique de l'élément de réseau connecté à l'élément de réseau ASON ne peut pas recevoir le premier identifiant, envoyer, par utilisation d'un surdébit d'une couche d'unité k de données de canal optique, un deuxième identifiant à l'élément de réseau connecté à l'élément de réseau ASON, dans lequel le premier identifiant est identique au deuxième identifiant ou différent de celui-ci ; et
le module de détermination (11) est spécifiquement configuré pour, lorsqu'il est déterminé qu'un surdébit d'une couche d'unité k de données de canal optique de l'élément de réseau connecté à l'élément de réseau ASON peut recevoir le deuxième identifiant, déterminer que l'élément de réseau connecté à l'élément de réseau ASON est un élément de réseau d'un réseau tiers et/ou un élément de réseau d'un réseau classique.

5. Elément de réseau selon la revendication 4, dans lequel :
le module d'envoi (15) est spécifiquement configuré pour envoyer un troisième identifiant à une couche d'unité k de données de canal optique d'ordre supérieur du deuxième élément de réseau ASON par utilisation du premier niveau TCM ; et
le module de détermination (11) est en outre configuré pour, lorsqu'il est déterminé que la couche d'unité k de données de canal optique d'ordre supérieur du deuxième élément de réseau ASON peut recevoir le troisième identifiant configuré par le module de configuration, déterminer que le premier TCM est disponible.

6. Elément de réseau selon l'une quelconque des revendications 4 ou 5, dans lequel :
le module de détermination (11) est en outre configuré pour, avant que le module de déclenchement (14) déclenche le reroutage, déterminer si la couche d'unité k de données de canal optique d'ordre supérieur de l'élément de réseau ASON peut recevoir un quatrième identifiant qui est envoyé par le deuxième élément de réseau ASON par utilisation du deuxième niveau TCM ; et
le module de surveillance (13) est en outre configuré pour, lorsque le module de détermination (11) détermine que la couche d'unité k de données de canal optique d'ordre supérieur de l'élément de réseau ASON peut recevoir le quatrième identifiant qui est envoyé par le deuxième élément de réseau ASON par utilisation du deuxième niveau TCM, surveiller, conformément au deuxième niveau TCM, si une liaison entre le deuxième élément de réseau ASON et l'élément de réseau ASON est défectueuse.

7. Elément de réseau d'un réseau optique à commutation automatique, ASON, comprenant un récepteur (24), un émetteur (23), un processeur (21) et une mémoire (22), dans lequel la mémoire stocke une instruction d'exécution, et lorsque l'élément de réseau ASON est exécuté, le processeur communique avec la mémoire et le processeur exécute l'instruction d'exécution pour permettre à l'élément de réseau ASON de mettre en oeuvre le procédé selon l'une quelconque des revendications 1 à 3.
